# EUROPÄISCHE PATENTSCHRIFT

(11) **EP 3 033 514 B1**
(45) Veröffentlichungstag und Bekanntmachung des Hinweises auf die Patenterteilung: **26.02.2020**
(21) Anmeldenummer: 14750465.8
(22) Anmeldetag: 08.08.2014
(51) Int. Cl.: F02D 41/28, F02D 41/02, F02D 41/14

(54) **UNIVERSELL EINSETZBARE STEUER- UND AUSWERTEEINHEIT INSBESONDERE ZUM BETRIEB EINER LAMBDASONDE**
UNIVERSAL CONTROL AND EVALUATION UNIT PARTICULARLY FOR OPERATION OF A LAMBDA PROBE
UNITÉ DE COMMANDE ET D'ÉVALUATION À USAGE UNIVERSEL, EN PARTICULIER POUR LE FONCTIONNEMENT D'UNE SONDE LAMBDA

(30) Priorität: 15.08.2013 DE 102013216223
(43) Veröffentlichungstag der Anmeldung: 22.06.2016
(73) Patentinhaber: Robert Bosch GmbH, 70442 Stuttgart (DE)
(72) Erfinder: BEVOT, Claudius, 70197 Stuttgart (DE)
(86) Internationale Anmeldenummer: PCT/EP2014/067130
(87) Internationale Veröffentlichungsnummer: WO 2015/022278

(56) Entgegenhaltungen:
- EP-A2- 2 022 966
- DE-A1-102008 001 697
- DE-A1-102010 000 663
- DE-B3-102006 022 109
- GB-A- 2 052 193
- JP-A- H1 127 300
- JP-A- S57 147 710
- US-A- 5 623 913
- US-A1- 2005 102 334

## Beschreibung

Die Erfindung betrifft eine Steuer- und Auswerteeinheit zum Betrieb und zur Auswertung eines oder mehrerer Sensoren, insbesondere zum Betrieb und zur Auswertung wenigstens einer Lambdasonde einer Brennkraftmaschine, gemäß dem Oberbegriff des Anspruchs 1.

### Stand der Technik

Eine Steuereinheit zum Betrieb einer Breitband-Lambdasonde geht aus der DE 10 2008 001 697 A1 hervor. Der Betrieb umfasst insbesondere die Steuerung der Lambdasonde sowie die Auswertung der von der Lambdasonde gelieferten Signale bzw. Daten. Die Steuereinheit umfasst eine Signalaufbereitungseinheit, einen A/D-(Analog-Digital-)Wandler, einen Pumpstromregler, eine Digitalschnittstelle, eine Steuerung, eine Pumpstromquelle, einen inneren Pumpelektrodenanschluss, einen äußeren Pumpelektrodenanschluss und einen Referenzelektrodenanschluss. Die Signalaufbereitungseinheit ist zur Ermittlung eines Ist-Wertes für den Pumpstromregler und zur Ermittlung von weiteren Informationen über den Betriebszustand der Breitband-Lambdasonde vorgesehen. Die weiteren Informationen über den Betriebszustand der Breitband-Lambdasonde sind über die Digitalschnittstelle ausgebbar.

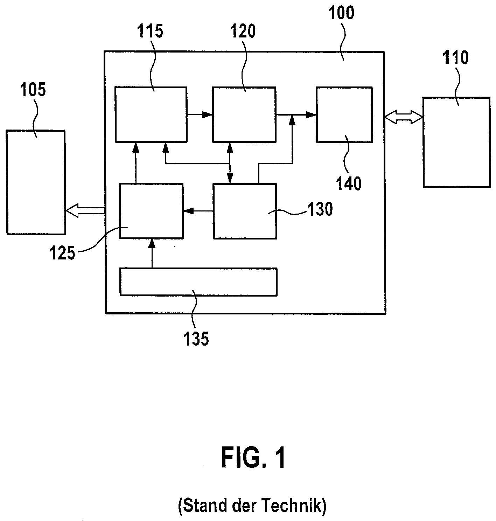

Eine entsprechende Steuereinheit in Gestalt einer integrierten Schaltung (IC) zur Steuerung von für Diesel- und Ottomotoren geeigneten Breitband-Lambdasonden wird von der Anmelderin unter der Bezeichnung "CJ135" vertrieben. Diese Steuereinheit wird nachfolgend anhand der Figur 1 beschrieben.

Mit einer genannten Steuereinheit lässt sich jeweils nur eine Lambdasonde eines bestimmten Sondentyps ansteuern, auswerten bzw. diagnostizieren. Für den Betrieb von wenigstens zwei Lambdasonden unterschiedlichen Sondentyps werden daher auch entsprechend viele unterschiedliche Steuereinheiten benötigt.

In der Patentschrift JP H11 27300 A wird eine Vorrichtung offenbart, die Signale von Sensoren auswertet und von analog nach digital wandelt.

Über die genannte Steuerung von Lambdasonden hinaus findet man bei Brennkraftmaschinen bzw. mit einer solchen Brennkraftmaschine ausgestatteten Kraftfahrzeugen heutzutage eine Vielzahl weiterer, für eine jeweilige Anwendung spezialisierter Steuereinheiten. Zusätzlich wird eine Brennkraftmaschine in an sich bekannter Weise mittels eines Motorsteuergeräts betrieben. Diese Steuereinheiten bzw. Steuergeräte besitzen Analog- und Digitaleingänge, welche zum Teil auch Zusatzfunktionen wie eine Pull-Up/-Down Struktur oder einen z.B. zur Auswertung von Temperatursensoren benötigten Spannungsteiler bereitstellen. Die dabei zugrunde liegenden Auswerteschaltungen können aus diskreten Bauteilen oder, durch Zusammenfassen mehrerer Ein- und Ausgänge, aus einzelnen ASICs (Application-Specific Integrated Circuits) bestehen.

Für jede dieser unterschiedlichen Anwendungen wird eine eigene Steuereinheit mit einer spezifischen Logikschaltung benötigt, so dass bei einem Wechsel der Funktion die Hardware der Logikschaltung angepasst werden muss oder ein Bestückvorbehalt auf dem jeweiligen Leiterplattenlayout vorgesehen werden muss.

### Offenbarung der Erfindung

Die erfindungsgemäße, als ASIC ausgebildete Steuer- und Auswerteeinheit, ist zum Betrieb sowie zur Auswertung eines oder mehrerer externer Sensoren universell einsetzbar. Die Steuereinheit weist nur eine einzige Auswerte- bzw. Messeinheit auf, deren Eingänge bzw. mit den Eingängen verbundene Strom-/Signalschalter mittels eines Multiplexers flexibel beschaltet werden können und damit eine universelle Messanordnung bereitstellen, welche ohne erforderliche Hardwareänderungen an unterschiedliche Sensortypen anpassbar ist.

Die Steuer- und Auswerteeinheit weist zusätzlich zu der genannten Auswerte- bzw. Messeinheit eine Stimulationseinheit (z.B. eine Stromquelle) auf, deren Eingänge bzw. mit den Eingängen verbundene Strom-/Signalschalter ebenfalls mittels des Multiplexers flexibel beschaltet werden können.

Die an den Signaleingängen der Steuer- und Auswerteeinheit anliegenden Sensorsignale, z.B. elektrische Spannungen oder Ströme, können ohne aktive bzw. gesteuerte Anregung durch die Steuereinheit hervorgerufen werden oder durch eine zeitlich und in der Höhe definierte Anregung, z.B. einen Strom, angeregt und in einem vorgegebenen Zeitrahmen erfasst bzw. gemessen werden. Ein entsprechendes Ausführungsbeispiel kann eine Sprungantwortmessung sein.

An den Eingängen der genannten Auswerte- bzw. Messeinheit können daher unterschiedliche Spannungs- oder Strommessungen durchgeführt werden und mittels der Stimulationseinheit zudem unterschiedliche Anregungen vorgenommen werden.

Zu diesem Zweck kann der Multiplexer erfindungsgemäß diejenigen Eingänge der Messeinheit freischalten, welche für die jeweilige, sensorspezifische Spannungs-/Strommessung benötigt werden. Die von der Messeinheit erfassten Signale werden bevorzugt an eine externe Recheneinheit, z.B. einen Microcontroller, digital übertragen, um mit einem dort implementierten Auswerteprogramm die weitere Verarbeitung vorzunehmen.

Der Multiplexer kann im Zeitmultiplexing-Verfahren betrieben werden, wobei die Schaltfrequenz einstellbar ist. Hierdurch lassen sich Leitungsressourcen einsparen, da dieselben Leitungen für unterschiedliche Signale verwendet werden können.

Auch können in der Messeinheit vorgesehene Stromschalter zur genannten Anregung eines Sensorsignals und/oder Signalschalter mittels einer einstellbaren bzw. programmierbaren Ablaufsteuerung der jeweiligen Anwendung entsprechend zeitlich gesteuert werden.

Mit der Erfindung ergeben sich einige Kostenvorteile, da die Auswertung von z.B. zwei Sonden mit nur einem ASIC anstatt mit zwei ASICs erfolgen kann, bei der Herstellung und Qualitätsprüfung der ASICs muss nur ein Bauteil bestückt und geprüft werden. Zusätzlich ergibt sich eine entsprechende Reduzierung der Stromkosten.

Ferner ergeben sich Vorteile hinsichtlich der Flexibilität, da weniger Hardware-Varianten erforderlich sind, da die notwendigen Anpassungen an die verschiedenen Sensoren allein durch programmtechnische Umschaltung erfolgen.

Die erfindungsgemäße Steuereinheit ermöglicht den Betrieb, d.h. die Steuerung und/oder Messung und/oder Auswertung und/oder Diagnose, wenigstens zweier Sensoren unterschiedlichen Bautyps, welche durch Spannungs- oder Strommessung ausgewertet werden. Bei diesen Sensoren handelt es sich bevorzugt um Sensoren einer selbstzündenden oder fremdgezündeten Brennkraftmaschine, insbesondere wenigstens zweier Lambdasonden unterschiedlichen Sondentyps, welche zur Abgasnachbehandlung in einer solchen Brennkraftmaschine eingesetzt werden. Die erfindungsgemäße Steuereinheit wird in Gestalt eines genannten ASIC-Bausteins implementiert.

Mit der Erfindung können mit nur einer Steuereinheit sowie einer externen Beschaltung sämtliche Typen und Kombinationen von Lambdasonden, z.B. Breitband-Lambdasonden, Sprungsonden oder Ein- und Zweizellersonden, betrieben werden, ohne eine Hardware-Umbestückung zu erfordern. Auch können mit der Steuereinheit andere oder zusätzliche zur Steuerung der Verbrennung erforderliche Sensoren, wie z.B. Temperatursensoren oder Kraftstoffdrucksensoren eines Kraftstoffspeichers (Common-Rail), betrieben werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt eine im Stand der Technik bekannte Steuereinheit zum Betrieb einer Breitband-Lambdasonde.
- Figur 2: zeigt eine Steuereinheit zum Betrieb einer Breitband-Lambdasonde gemäß der Erfindung.
- Figur 3: zeigt eine beispielhafte Pin-Belegung einer Steuereinheit gemäß Figur 2.

### Beschreibung von Ausführungsbeispielen

Die in der Figur 1 gezeigte, in ihrem Aufbau an sich bekannte Steuereinheit 100 (eingangs genannter IC mit der Bezeichnung "CJ135") entspricht in ihrer Funktion einem Auswertebaustein für eine Breitband-Lambdasonde. Die Steuereinheit ist daher mit einer Breitband-Lambdasonde 105 signal- bzw. datentechnisch verbunden. Zusätzlich besteht eine Signalverbindung mit einem externen Microcontroller (µC) 110.

Die Steuereinheit 100 umfasst einen Analog/Digital-(A/D-)Wandler 115, einen Filter 120 sowie ein SPI-Schieberegister (SPI = Serial Peripheral Interface) 140. Mittels des A/D-Wandlers 115 werden die von der Lambdasonde 105 gelieferten analogen Messdaten für die digitale Weiterverarbeitung digitalisiert. Mittels des Filters 120, bevorzugt ein Tiefpassfilter, wird das Signalrauschen des vom Sensor gelieferten Messignals verringert. Die so gefilterten digitalen Daten werden an den Microcontroller 110 übertragen.

Die Steuereinheit 100 umfasst ferner eine Schaltmatrix 125, welche mittels eines Steuermoduls 130 betrieben wird und von einem Stromgenerator 135 gespeist wird. Mittels der Schaltmatrix 125 lassen sich die Eingänge der Steuereinheit sowie die Art der Auswertung der Messsignale flexibel anpassen bzw. verändern.

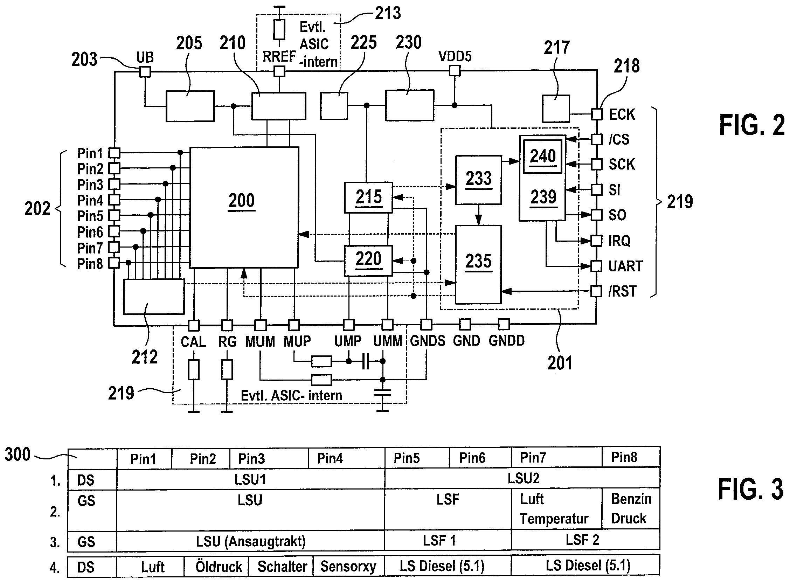

Die in der Figur 2 gezeigte universelle Steuereinheit weist einen analogen ersten Schaltungsteil sowie einen digitalen zweiten Schaltungsteil auf, der durch die gestrichelte Linie 201 von den Komponenten des analogen Schaltungsteils abgegrenzt ist.

Der analoge Schaltungsteil umfasst insbesondere einen mit vorliegend acht nach außen geführten Eingängen bzw. Pins 202 (Pin1 - Pin8) verbundenen Multiplexer 200. Der Multiplexer besteht in dem vorliegenden Ausführungsbeispiel aus hochohmigen Signalschaltern, welche die Messeinheit mit den von der Lambdasonde 105 gelieferten Messsignalen verbindet, sowie niederohmigen Stromschaltern, welche eine Anregung der an den Pins 202 extern angeschlossenen Strukturen, z.B. einen Lambdasensor 105, ermöglicht. Der Multiplexer arbeitet in diesem Ausführungsbeispiel nach einem an sich bekannten Zeitmultiplexing-Verfahren, und zwar vorliegend mit einstellbarer Schaltfrequenz. Durch das Zeitmultiplexing werden vorteilhaft Leitungsressourcen eingespart, da dieselben Leitungen für unterschiedliche Signale verwendet werden können.

Die universelle Steuereinheit bzw. Auswerteschaltung kann an den vorliegenden acht Pins 202 unterschiedliche Spannungsmessungen durchführen, sowohl differentiell als auch mit Massebezug.

Die Auswerteschaltung bzw. Messeinheit umfasst einen Tiefpassfilter, der entweder im ASIC 213 oder extern implementiert ist, einen Signal-Messverstärker mit einstellbarem Verstärkungsfaktor, in dem vorliegenden Ausführungsbeispiel ein differentieller Operationsverstärker 220, sowie einem A/D-Wandler 215. Die digitalisierten Signale werden an eine z.B. in einem Motorsteuergerät vorliegende Recheneinheit übertragen, um mit Hilfe eines geeigneten Auswerteprogramms die weitere Verarbeitung vorzunehmen. In dem vorliegenden Ausführungsbeispiel handelt es sich bei der Recheneinheit um einen extern angeordneten Microcontroller 110. Es ist allerdings hervorzuheben, dass anstelle einer externen Recheneinheit auch der in dem Steuergerät angeordnete digitale Signalprozessor (DSP) 233 oder dergleichen diese Funktionalität übernehmen kann.

Zusätzlich ist im analogen Schaltungsteil eine Spannungsregelung 205 zur Stabilisierung der Versorgungsspannung (UB) 203 angeordnet, welche vorliegend mittels einer in einem externen ASIC vorgesehenen Referenzspannung 213 (z.B. ein Bandgap) sowie eine damit verbundene Stromquelle 210 stabilisiert wird. Im unteren Bereich der gezeigten Schaltungsanordnung ist eine Schaltmatrix 219 mit Strom- und Spannungsschaltern (CAL, RG, MUM, MUP, etc.) vorgesehen. Einer oder mehrere Spannungskomparatoren 212 dienen zur zur Pin-Überwachung. Zusätzlich ist eine Phasenregelschleife (PLL = phase-locked loop) 217 zur Erzeugung eines internen Taktes aus einem vom Microcontroller über den Anschluss (ECK) 218 bereitgestellten Referenztakt, mittels dessen die Steuereinheit mit dem Microcontroller 110 synchronisierbar ist, vorgesehen.

Der digitale Schaltungsteil 201 umfasst insbesondere einen digitalen Signalprozessor (DSP) 233 sowie eine Ablaufsteuerung 235. Der DSP 233 und/oder die Ablaufsteuerung 235 sind entweder elektronisch (d.h. als Hardware) fest programmiert und über z.B. ein genanntes SPI-Schieberegister konfigurierbar oder z.B. mittels eines Flash-Speichers programmierbar ausgebildet. Die feste Verdrahtung oder freie Programmierbarkeit kann dabei auch in Teilen der gesamten Schaltung oder durch Kombination der beiden Varianten erfolgen.

Der digitale Schaltungsteil 201 umfasst ferner eine Speichereinheit 240 zur Zwischenspeicherung von insbesondere mit den erfassten Sensorsignalen korrespondierenden Daten. Diese Daten können somit für die interne Weiterverarbeitung z.B. mittels des DSP 233 oder zur Übertragung an den Microcontroller 110 aus der Speichereinheit 240 abgerufen werden.

Zusätzlich sind im digitalen Schaltungsteil 201 eine oder mehrere digitale Datenschnittstellen 239 zum Microcontroller 110 sowie zur Konfiguration der Steuereinheit vorgesehen. Dabei kann es sich um einen üblichen Datenbus oder eine an sich bekannte Punkt-zu-Punkt Verbindung handeln. Gemäß einer ersten Variante kann ein 1 X SPI Bus zur Datenübertragung an den Microcontroller 110 sowie zur Konfiguration der Steuereinheit vorgesehen sein. In einer zweiten Variante kann ein 1 X SPI mit relativ geringer Übertragungsgeschwindigkeit für die Konfiguration der Steuereinheit sowie eine schnelle Übertragungsstrecke (z.B. asynchrone Übertragung mittels eines UART = Universal Asynchronous Receiver Transmitter) vorgesehen sein, wobei der Pumpstromregler im Microcontroller 110 realisiert ist.

Der digitale Schaltungsteil 201 kann durch einen ASIC realisiert werden, der mit den analogen Komponenten, wie hierin beschrieben, kommuniziert. In dem ASIC befinden sich dann ein oder zwei DSPs 233, welche die mittels des ADCs 215 digitalisierten Messdaten der Sensoren verarbeiten können. Diese DSPs 233 können z.B. als Pumpstromregler für Breitband-Lambdasonden konfiguriert werden.

Es ist anzumerken, dass die Anforderungen an die Leistungsfähigkeit dieser internen DSPs 233 dadurch verringert werden kann, dass bestimmte Messdaten über die digitale Schnittstelle 239, oder über eine eigene Punkt-zu-Punkt Verbindung, an den externen Microcontroller 110 schnell übertragen werden und dort verarbeitet werden. Die sich ergebenden Ergebnisinformationen dieser externen Verarbeitung werden dann wieder zurück an den ASIC 201 gesendet. Bei dieser Variante ist auf eine möglichst geringe Latenz bei der Übertragung und Verarbeitung der Daten erforderlich. Wie eben beschrieben, kann z.B. ein genannter Pumpstromregler in dieser Weise an den Microcontroller 110 ausgelagert werden. Wie ebenfalls beschrieben, sind hier auch Kombinationen beider Ansätze möglich, d.h. im Falle z.B. zweier Pumpstromregler (gemäß Figur 3, insbesondere dortiges Beschaltungsbeispiel 1. z.B. für eine innere und äußere Pumpelektrode) kann einer dieser Regler im ASIC 201, der andere im externen Microcontroller berechnet werden.

Die analogen Eingänge über die vorliegend acht Pins 202 können wie folgt beschaltet bzw. betrieben werden:
a. Spannungsmessung, gesteuert durch die Ablaufsteuerung 235;
b. Signalerzeugung, z.B. als Stromquelle oder Pull-Up/Down-Quelle, gesteuert durch die Ablaufsteuerung 235;
c. Schutz gegen elektrostatische Entladung (ESD = electrostatic discharge);
d. Überwachung der Pin-Spannung, z.B. zur Kurzschlusserkennung;
e. Hochohmigschaltung eines oder mehrerer Pins 202 im Fehlerfall;
f. Bereitstellen einer Spannungsfestigkeit der Pins 202 gegen Überspannung.

Die universelle Steuereinheit ist über Ausgänge 218, 219 mit dem genannten, außerhalb der Steuereinheit angeordneten Microcontroller 110 verbunden. Der Microcontroller ist bevorzugt in einem Steuergerät der Brennkraftmaschine, z.B. einem Motorsteuergerät, untergebracht.

Die Steuereinheit gemäß Figur 2 kann somit als Weiterentwicklung der in Figur 1 gezeigten Steuereinheit verstanden werden und besitzt somit bevorzugt in sämtliche Eigenschaften und Funktionalitäten wenigstens die Leistungsfähigkeit der in Figur 1 gezeigten Steuereinheit, wobei zusätzlich die oben beschriebene Flexibilität durch Variation der Beschaltung der Ein- und Ausgänge (Flexl/O) sowie durch die flexible Programmierbarkeit mittels der Ablaufsteuerung 235 hinzukommt.

Die Figur 3 zeigt eine Beispieltabelle möglicher Beschaltungskombinationen bzw. Pin-Belegungen einer in der Figur 2 gezeigten, in nur einem ASIC implementierten Steuereinheit. Die in der Tabelle gezeigten vier Beispiele 1. - 4. umfassen gemäß Spalte 1 sowohl Anwendungen im Bereich von selbstzündenden DieselMotoren (DS = Diesel Systems) als auch von fremdgezündeten mit Ottokraftstoff betriebenen Ottomotoren (GS = Gasoline Systems).

In dem 1. Belegungsbeispiel eines Dieselmotors dienen die Pins 1 - 4 zur Stromversorgung und Daten- bzw. Signalerfassung einer inneren Pumpelektrode (LSU1) einer Breitband-Lambdasonde und die Pins 5 - 8 einer entsprechenden Stromversorgung und Signalerfassung einer äußeren Pumpelektrode (LSU2) der Lambdasonde.

In der 2. Beispielbelegung eines Ottomotors dienen die Pins 1 - 4 wiederum der Stromversorgung und Signalerfassung von Pumpelektroden einer Breitband-Lambdasonde (LSU), d.h. vorliegend sowohl einer äußeren als auch einer inneren Pumpelektrode, die Pins 5 und 6 der Spannungs- bzw. Stromversorgung bzw. Signalerfassung einer Sprungsonde (LSF), der Pin 7 der Signalerfassung eines Temperatursensors zur Erfassung der Lufttemperatur und der Pin 8 der Signalerfassung eines Drucksensors zur Erfassung des Kraftstoffdrucks in einem ggf. vorliegenden Common-Rail-System.

In dem 3. Belegungsbeispiel wiederum eines Ottomotors dienen die Pins 1 - 4 zur Spannungs- bzw. Stromversorgung sowie Signalerfassung einer im Ansaugtrakt des Ottomotors angeordneten Breitband-Lambdasonde (LSU), die Pins 5 und 6 zur Spannungs- bzw. Stromversorgung sowie Signalerfassung einer inneren Pumpelektrode (LSF1) einer Sprungsonde und die Pins 7 und 8 der Spannungs- bzw. Stromversorgung sowie Signalerfassung einer äußeren Pumpelektrode (LSF2) der Sprungsonde.

In dem 4. Belegungsbeispiel eines Dieselmotors dient der Pin1 zur Signalerfassung eines Luftmassensensors, der Pin 2 zur Signalerfassung eines Öldrucksensors, der Pin 3 zur Signalerfassung der Position eines Schalters, z.B. eines Klimaanlagenschalters, der Pin 4 zur Signalerfassung eines weiteren (beliebigen) Sensors. Die Pins 5 und 6 sowie 7 und 8 dienen in dem vorliegenden Beispiel zur Spannungs- bzw. Stromversorgung sowie Signalerfassung einer Breitband-Lambdasonde. Der gezeigte Sondentyp "LSU 5.1" entspricht einer insbesondere für Dieselmotoren geeigneten Einzellerbreitbandsonde.

Aufgrund der in Figur 3 illustrierten Flexibilität bei der Beschaltung der erfindungsgemäßen Steuereinheit kann diese, einschließlich der umfassten Auswerteschaltung, an neue Sensoren und deren Erfordernisse angepasst werden, ohne die Elektronik bzw. Logik (d.h. Hardware) der Steuereinheit verändern zu müssen.

## Patentansprüche

1. Als ASIC ausgebildete Steuer- und Auswerteeinheit zum Betrieb und zur Auswertung wenigstens eines Sensors (105), insbesondere zum Betrieb und zur Auswertung wenigstens einer Lambdasonde einer Brennkraftmaschine, wobei Signaleingänge (202) zum Empfangen von analogen Messsignalen des wenigstens einen Sensors (105) angeordnet sind, wobei empfangene analoge Messsignale mittels eines Analog/Digital-Wandlers (215) digitalisiert werden, und wobei eine Signalübertragungseinheit (239) angeordnet ist, mittels der digitalisierte Signale an eine Recheneinheit (110, 233) übertragen werden, wobei die Signaleingänge (202) mittels eines Multiplexers (200) schaltbar sind, die Steuer- und Auswerteeinheit eine einzige Auswerte- bzw. Messeinheit aufweist, deren Eingänge mittels des Multiplexers (200) flexibel beschaltet werden können, oder mit den Eingängen verbundene Strom-/Signalschalter mittels des Multiplexers flexibel beschaltet werden können, und Steuer- und Auswerteeinheit zusätzlich eine Stimulationseinheit aufweist, deren Eingänge mittels des Multiplexers (200) flexibel beschaltet werden können, oder deren Eingänge mit Strom- oder Signalschaltern verbunden sind, die ebenfalls mittels des Multiplexers (200) flexibel beschaltet werden können, und mittels des Multiplexers (200) diejenigen Signaleingänge (202) freischaltbar sind, welche für eine sensorspezifische elektrische Spannungs- und/oder Strommessung benötigt werden,
**dadurch gekennzeichnet, dass**
mit der Steuer- und Auswerteeinheit wenigstens zwei Lambdasonden unterschiedlichen Bautyps, welche durch Spannungs- oder Strommessungen auswertbar sind, betreibbar sind und dass Stromschalter und/oder Signalschalter angeordnet sind, die mittels einer programmierbaren Ablaufsteuerung (235) der Auswerte- und Steuereinheit der jeweiligen Anwendung entsprechend zeitlich steuerbar sind.

2. Steuer- und Auswerteeinheit nach Anspruch 1, **dadurch gekennzeichnet, dass** die empfangenen analogen Messsignale des wenigstens einen Sensors (105) durch ein bezüglich des Zeitverhaltens und/oder der Signalgröße bestimmtes Anregungssignal angeregt werden.

3. Steuer- und Auswerteeinheit nach Anspruch 2, **dadurch gekennzeichnet, dass** eine durch Anregung hervorgerufene Sprungantwort des wenigstens einen Sensors (105) innerhalb eines vorgegebenen Zeitfensters erfasst und ausgewertet wird.

4. Steuer- und Auswerteeinheit nach Anspruch nach einem der vorhergehenden Ansprüche, **dadurch gekennzeichnet, dass** der Multiplexer (200) im Zeitmultiplexing-Verfahren betrieben wird.

5. Steuer- und Auswerteeinheit nach Anspruch nach einem der vorhergehenden Ansprüche, **dadurch gekennzeichnet, dass** die Schaltfrequenz des Multiplexers (200) einstellbar ist.

6. Steuer- und Auswerteeinheit nach einem der vorhergehenden Ansprüche, **dadurch gekennzeichnet, dass** die Recheneinheit (233) durch einen in der Steuereinheit angeordneten digitalen Signalprozessor (233) gebildet ist, mittels dessen die digitalisierten Messsignale ausgewertet werden.

7. Steuer- und Auswerteeinheit nach einem der vorhergehenden Ansprüche, **dadurch gekennzeichnet, dass** die Recheneinheit (110) außerhalb der Steuereinheit angeordnet ist und die an sie übertragenen digitalisierten Signale auswertet und die Ergebnisse der Auswertung an die Steuereinheit zurücksendet.

8. Steuer- und Auswerteeinheit nach Anspruch 1, **dadurch gekennzeichnet, dass** der/die Stromschalter und/oder Signalschalter mittels einer Schaltmatrix (219) konfigurierbar sind.

9. Steuer- und Auswerteeinheit nach einem der Ansprüche 1, 7 bis 8, **dadurch gekennzeichnet, dass** mittels einer Phasenregelschleife (217) ein interner Takt auf der Grundlage eines von der externen Recheneinheit (110) bereitgestellten Referenztakts erzeugt wird, mittels dessen die Steuereinheit mit der externen Recheneinheit (110) synchronisierbar ist.

10. Steuer- und Auswerteeinheit nach einem der vorhergehenden Ansprüche, **dadurch gekennzeichnet, dass** ein Datenspeicher (240) zur Zwischenspeicherung von mit den erfassten Sensorsignalen korrespondierenden Daten angeordnet ist.

## Claims

1. A control and evaluation unit, embodied as an ASIC, for operating and evaluating at least one sensor (105), in particular for operating and evaluating at least one lambda probe of an internal combustion engine, wherein signal inputs (202) for receiving analogue measurement signals of the at least one sensor (105) are arranged, wherein received analogue measurement signals are digitized by means of an analogue/digital converter (215), and wherein a signal transmission unit (239), by means of which digitized signals are transmitted to a computing unit (110, 233), is arranged, wherein the signal inputs (202) can be connected by means of a multiplexer (200), the control and evaluation unit has a single evaluation and measuring unit whose inputs can be connected flexibly by means of the multiplexer (200), or current switches/signal switches which are connected to the inputs can be connected flexibly by means of the multiplexer, and the control and evaluation unit additionally has a simulation unit whose input can be connected in a flexible way by means of the multiplexer (200) or whose inputs are connected to current switches or signal switches which can also be connected in a flexible way by means of the multiplexer (200), and by means of the multiplexer (200) it is possible to enable those signal inputs (202) which are required for sensor-specific electrical voltage measurement and/or current measurement,
**characterized in that**
with the control and evaluation unit it is possible to operate at least two lambda probes of differing designs, which can be evaluated by means of voltage measurements or current measurements, and **in that** current switches and/or signal switches are arranged which can be controlled in a correspondingly chronological fashion by means of a programmable sequencing controller (235) of the evaluation and control unit of the respective application.

2. Control and evaluation unit according to Claim 1, **characterized in that** the received analogue measurement signals of the at least one sensor (105) are excited by an excitation signal which is determined with respect to the time behaviour and/or the signal variable.

3. Control and evaluation unit according to Claim 2, **characterized in that** a step response, caused by excitation, of the at least one sensor (105) is sensed and evaluated within a predefined time window.

4. Control and evaluation unit according to claim according to one of the preceding claims, **characterized in that** the multiplexer (200) is operated using a time-division multiplex method.

5. Control and evaluation unit according to claim according to one of the preceding claims, **characterized in that** the switching frequency of the multiplexer (200) can be adjusted.

6. Control and evaluation unit according to one of the preceding claims, **characterized in that** the computing unit (233) is formed by a digital signal processor (233) which is arranged in the control unit and by means of which the digitized measurement signals are evaluated.

7. Control and evaluation unit according to one of the preceding claims, **characterized in that** the computing unit (110) is arranged outside the control unit and evaluates the digitized signals which are transmitted to it and sends back the results of the evaluation to the control unit.

8. Control and evaluation unit according to Claim 1,
**characterized in that**
the current switch/switches and/or signal switch/switches can be configured by means of a switching matrix (219).

9. Control and evaluation unit according to one of Claims 1, 7 to 8, **characterized in that** by means of a phase-locked loop (217) an internal clock is generated on the basis of a reference clock which is made available by the external computing unit (110), by means of which reference clock the control unit can be synchronized with the external computing unit (110).

10. Control and evaluation unit according to one of the preceding claims, **characterized in that** a data memory (240) for buffering data which correspond to the acquired sensor signals is arranged.

## Revendications

1. Unité de commande et d'évaluation réalisée sous la forme d'un ASIC et permettant de faire fonctionner et d'évaluer au moins un capteur (105), en particulier pour faire fonctionner et évaluer au moins une sonde lambda d'un moteur à combustion interne, dans lequel il est prévu des entrées de signaux (202) permettant de recevoir des signaux de mesure analogiques dudit au moins un capteur (105), dans lequel les signaux de mesure analogiques reçus sont numérisés au moyen d'un convertisseur analogique/numérique (215) et dans lequel il est prévu une unité de transmission de signaux (239) permettant de transmettre des signaux numérisés à une unité de calcul (110, 233), dans lequel les entrées de signaux (202) peuvent être commutées au moyen d'un multiplexeur (200), l'unité de commande et d'évaluation ne comportant qu'une seule unité d'évaluation dont les entrées peuvent être connectées de manière flexible au moyen du multiplexeur (200) ou des commutateurs de courant/signal reliés aux entrées peuvent être connectés de manière flexible au moyen du multiplexeur, et l'unité de commande et d'évaluation comprend en outre une unité de stimulation dont les entrées peuvent être reliées de manière flexible au moyen du multiplexeur (200) ou dont les entrées sont reliées à des commutateurs de courant ou de signaux qui peuvent également être connectés de manière flexible au moyen du multiplexeur (200), et les entrées de signaux (202) nécessaires à la mesure de tension électrique et/ou de courant spécifique du capteur peuvent être déconnectées au moyen du multiplexeur (200), **caractérisé en ce qu'**au moins deux sondes lambda de types de construction différents, qui peuvent être évaluées par des mesures de tension ou de courant, peuvent être mises en fonctionnement à l'aide de l'unité de commande et d'évaluation, et **en ce qu'**il est prévu des commutateurs de courant et/ou des commutateurs de signaux qui peuvent être commandés dans le temps au moyen d'une commande séquentielle programmable (235) de l'unité d'évaluation et de commande d'une manière qui correspond à l'application respective.

2. Unité de commande et d'évaluation selon la revendication 1, **caractérisée en ce que** les signaux de mesure analogiques reçus dudit au moins un capteur (105) sont excités par un signal d'excitation déterminé par rapport au comportement temporel et/ou à l'amplitude du signal.

3. Unité de commande et d'évaluation selon la revendication 2, **caractérisée en ce qu'**une réponse incrémentale d'au moins un capteur (105) provoquée par excitation est détectée et évaluée dans une fenêtre temporelle prédéterminée.

4. Unité de commande et d'évaluation selon la revendication selon l'une des revendications précédentes, **caractérisée en ce que** le multiplexeur (200) est évalué selon le procédé de multiplexage par répartition dans le temps.

5. Unité de commande et d'évaluation selon la revendication selon l'une des revendications précédentes, **caractérisée en ce que** la fréquence de commutation du multiplexeur (200) est réglable.

6. Unité de commande et d'évaluation selon l'une des revendications précédentes, **caractérisée en ce que** l'unité de calcul (233) est constituée par un processeur de signal numérique (233) disposé dans l'unité de commande, au moyen duquel les signaux de mesure numérisés sont évalués.

7. Unité de commande et d'évaluation selon l'une des revendications précédentes, **caractérisée en ce que** l'unité de calcul (110) est disposée à l'extérieur de l'unité de commande et évalue les signaux numériques qui lui sont transmis et envoie les résultats de l'évaluation à l'unité de commande.

8. Unité de commande et d'évaluation selon la revendication 1, **caractérisée en ce que** le ou les commutateurs de courant et/ou de signaux peuvent être configurés au moyen d'une matrice de commutation (219).

9. Unité de commande et d'évaluation selon l'une des revendications 1, 7 à 8, **caractérisée en ce qu'**une horloge interne est générée au moyen d'une boucle à verrouillage de phase (217) sur la base d'une horloge de référence fournie par l'unité de calcul externe (110), laquelle horloge interne permet de synchroniser l'unité de commande avec l'unité de calcul externe (110).

10. Unité de commande et d'évaluation selon l'une des revendications précédentes, **caractérisée en ce qu'**il est prévu une mémoire de données (240) pour le stockage intermédiaire de données correspondant aux signaux de capteurs détectés.
